# FASCICULE DE BREVET EUROPEEN

(11) **EP 3 303 894 B1**
(45) Date de publication et mention de la délivrance du brevet: **22.07.2020**
(21) Numéro de dépôt: 16733140.4
(22) Date de dépôt: 19.05.2016
(51) Int. Cl.: F16L 41/03, B23P 19/06, B25B 27/00, B60H 1/00, F16L 43/02

(54) **RACCORD FLUIDIQUE A PLUSIEURS VOIES POUR VÉHICULE AUTOMOBILE**
MEHRZWEIGIGE FLUIDVERBINDUNG FÜR EIN KRAFTFAHRZEUG
MULTI-BRANCH FLUID JUNCTION FOR A MOTOR VEHICLE

(30) Priorité: 01.06.2015 FR 1554951
(43) Date de publication de la demande: 11.04.2018
(73) Titulaire: PSA AUTOMOBILES S.A., 78300 Poissy (FR)
(72) Inventeur: LEGRAND, Francois Noel, 25200 Montbeliard (FR)
(74) Mandataire: Bourguignon, Eric Pascal Jean
(86) Numéro de dépôt international: PCT/FR2016/051185
(87) Numéro de publication internationale: WO 2016/193566

(56) Documents cités:
- WO-A1-2015/048374
- US-A1- 2005 011 575
- US-A1- 2010 278 951
- US-A1- 2013 052 377

## Description

La présente invention porte sur un raccord fluidique à plusieurs voies pour véhicule automobile, ainsi que sur le procédé de montage automatique correspondant. L'invention trouve une application particulièrement avantageuse, mais non exclusive, avec les circuits de fluide chaud ou froid installés dans les véhicules automobiles.

De façon connue en soi, les conduits d'un circuit de fluide sont interconnectés entre eux au moyen d'un raccord fluidique à plusieurs voies. Un tel raccord est généralement mis en place de manière manuelle sur un support sous-caisse par un opérateur. Par conséquent, le montage du raccord est relativement long, ce qui n'est pas compatible avec la tendance générale dans l'industrie automobile qui est de réduire au maximum les coûts de main d'œuvre.

Les documents US 2005/011575, WO 2015/048374, US 2010/278951 et US 2013/052377 décrivent des raccords fluidiques comprenant des dispositifs de vissages optimisés.

Il existe donc le besoin d'automatiser la mise en place des raccords fluidiques en chaîne de montage tout en respectant les normes de vissage automatique imposant un intervalle de tolérance très faible.

L'invention vise à combler ce besoin en proposant un raccord fluidique à plusieurs voies pour véhicule automobile selon la revendication 1.

L'invention permet ainsi d'assurer un positionnement précis du raccord fluidique sur la platine de montage mécanique correspondante, ce qui permet d'automatiser le vissage du raccord sur l'élément support tout en respectant les normes de vissage automatique.

Selon une réalisation, ledit moyen d'indexage est constitué par un trou pilote appartenant audit raccord fluidique apte à coopérer avec un plot d'indexage appartenant à ladite platine de montage mécanique.

Selon une réalisation, ledit moyen d'indexage présente un axe incliné par rapport à un axe de ladite ouverture.

Selon une réalisation, ladite surépaisseur présente une face supérieure inclinée. L'invention permet ainsi de compenser une inclinaison éventuelle de l'élément support.

Selon une réalisation, ladite ouverture présente une forme oblongue ayant une direction d'allongement longitudinale parallèle à un axe du corps.

Selon une réalisation, ledit raccord fluidique comporte deux embouts de connexion situés aux extrémités axiales dudit corps, et deux autres embouts de connexion ayant une orientation radiale par rapport à un axe dudit corps.

L'invention a également pour objet un système qui comprend le raccord fluidique décrit plus haut et une platine de montage mécanique avec laquelle coopère le moyen d'indexage dudit raccord fluidique.

L'invention a également pour objet un procédé de montage automatisé d'un raccord fluidique à plusieurs voies pour véhicule automobile tel que précédemment défini, caractérisé en ce que ledit procédé comporte:
- une étape de mise en place dudit raccord fluidique sur une platine de montage mécanique via des moyens d'indexage,
- une étape de positionnement dudit raccord fluidique à proximité d'un élément support situé en sous-caisse dudit véhicule automobile,
- une étape de vissage dudit raccord fluidique sur ledit élément support, et
- une étape de retrait de ladite platine de montage mécanique.

Selon une mise en œuvre, ladite étape de vissage est réalisée sur un renfort longeron incliné par rapport à un plancher de véhicule.

L'invention sera mieux comprise à la lecture de la description qui suit et à l'examen des figures qui l'accompagnent. Ces figures ne sont données qu'à titre illustratif mais nullement limitatif de l'invention.

La figure 1 est une vue en perspective d'un raccord fluidique à quatre voies selon la présente invention;

La figure 2 est une vue en perspective d'une platine de montage mécanique utilisée pour la mise en œuvre du procédé de montage selon la présente invention;

Les figures 3a et 3b sont des vues en perspective illustrant respectivement une étape de mise en place du raccord fluidique sur la platine de montage et une étape de vissage du raccord fluidique sur un élément support.

Les éléments identiques, similaires, ou analogues conservent la même référence d'une figure à l'autre.

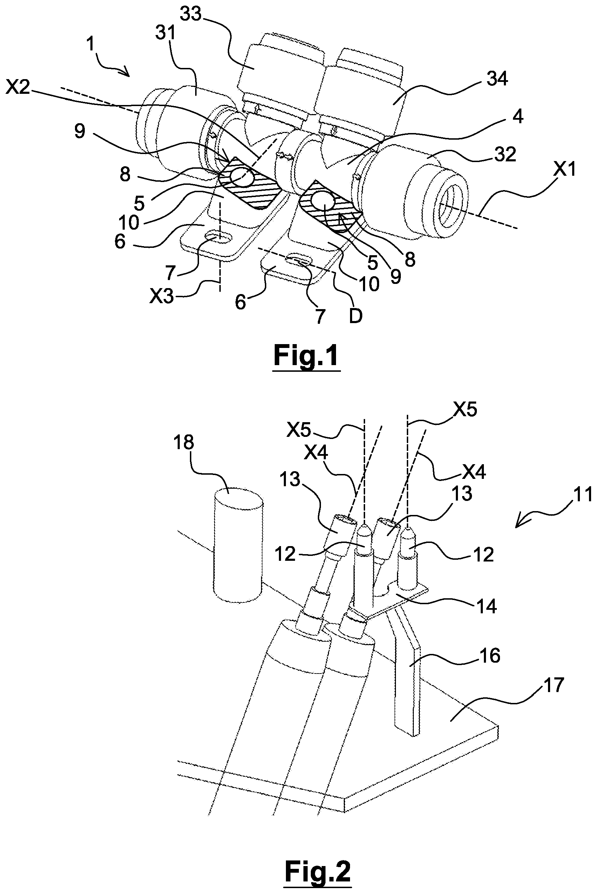

La figure 1 montre un raccord fluidique 1 à plusieurs voies pouvant être utilisé par exemple avec un réchauffeur thermique principal ou additionnel de type échangeur eau/air pulsé aussi connu sous le nom de « Webasto » (marque déposée). Ce type d'installation permet d'apporter une source de chaleur complémentaire dans l'habitacle du véhicule. Le raccord fluidique 1 à plusieurs voies pourra alors par exemple mettre en relation le moteur et le radiateur avec ce réchauffeur. En variante, le raccord fluidique pourra être utilisé dans un circuit froid de climatisation.

Plus précisément, le raccord fluidique 1 comporte un corps 4 ayant globalement une forme cylindrique muni à chacune de ses extrémités axiales d'un embout 31, 32 de connexion à des conduits de fluide. Les embouts 31, 32 se situent sensiblement dans le prolongement du corps 4. En outre, deux autres embouts 33, 34 sont orientés radialement par rapport à l'axe X1 du corps 4. De préférence, les embouts 31-34 sont à connexion rapide, par exemple de type encliquetable. Bien entendu, la forme et les dimensions du corps 4 ainsi que le nombre d'embouts de connexion 31-34 pourront être adaptés en fonction de l'application.

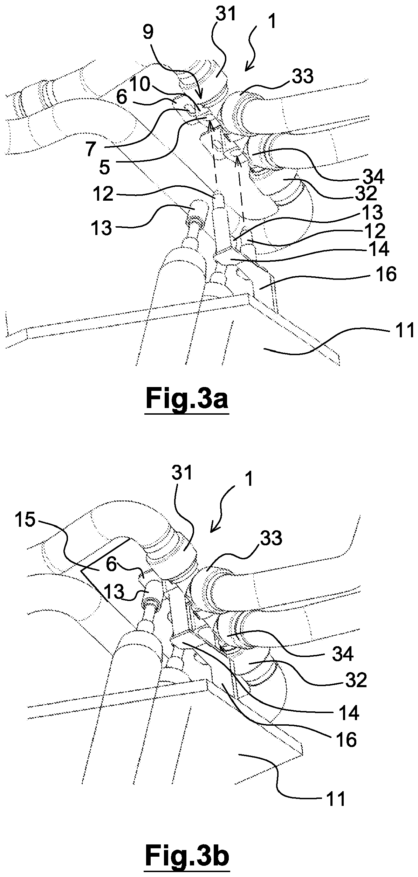

Par ailleurs, le raccord fluidique 1 est muni de moyen d'indexage 9 par rapport à une platine de montage et d'ouvertures 7 destinées à autoriser le passage de moyens de fixation du raccord 1 sur un élément support 15 visible en figure 3b. L'élément support 15 est par exemple un renfort longeron situé en sous caisse du véhicule qui ne sera pas nécessairement parallèle au sol. Les moyens de fixation sont en l'occurrence des vis mais pourraient en variante être remplacés par des rivets ou tout autre moyen équivalent de fixation.

En l'occurrence, les ouvertures 7 sont ménagées chacune dans une patte 6 ayant sensiblement la forme d'une plaque rectangulaire s'étendant en saillie par rapport au corps 4. La patte 6 pourra venir de matière avec le corps 4 du raccord fluidique 1, ou être une pièce rapportée par rapport au corps 4. Le nombre de pattes 6 pourra varier en fonction de la configuration du raccord fluidique 1. L'ouverture 7 présente avantageusement une forme oblongue ayant une direction d'allongement longitudinale D sensiblement parallèle à l'axe X1 du corps 4.

Les moyens d'indexage 9 sont constitués chacun par un trou pilote 5 destiné à coopérer avec un plot d'indexage 12 correspondant situé sur une platine de montage mécanique 11 visible en figure 2. Chaque trou pilote 5 est réalisé dans une surépaisseur 10 positionnée entre le corps 4 et l'extrémité de la patte 6 dans laquelle est ménagée l'ouverture 7 correspondante. Afin de compenser l'inclinaison de l'élément support 15, les faces supérieures 8 des surépaisseurs 10 sont de préférence inclinées par rapport à l'axe X1, et les axes X2 des trous pilotes 5 sont inclinés par rapport aux axes X3 des ouvertures 7. En variante, les trous pilotes 5 sont remplacés par des pions destinés à coopérer avec des trous de forme complémentaire réalisés dans la platine de montage mécanique 11.

La platine de montage mécanique 11 montrée en figure 2 comporte deux plots d'indexages 12 situés sur un support 14 surélevé par rapport à une base 17 au moyen d"un bras 16. Chaque plot 12 est destiné à coopérer avec un trou pilote 5 correspondant situé sur une patte 6 du raccord fluidique 1. Une telle configuration permet un maintien en position efficace du raccord 1 sur la platine 11 lors de son déplacement avant le vissage dudit raccord 1 sur l'élément support 15.

A cet effet, la platine de montage 11 comporte en outre deux broches de vissage 13. Afin de compenser une inclinaison de l'élément support 15, les axes X4 des broches 13 sont inclinés par rapport aux axes X5 des plots d'indexage 12. En outre, les plots d'indexage 12 pourront présenter des longueurs différentes l'un par rapport à l'autre.

La platine de montage mécanique 11 pourra également comporter d'autres plots d'indexages situés sur la base 17 destinés à coopérer avec des trous pilotes correspondants réalisés sous le plancher du véhicule. Il est ainsi possible de contrôler le positionnement de la platine de montage mécanique 11 par rapport à l'élément support 15 lors de l'opération de coiffage. En outre, il sera possible de prévoir un appui pour le réchauffeur thermique référencé 18 sur la figure 2.

On décrit ci-après en référence aux figures 3a et 3b, le procédé de montage automatique du raccord fluidique 1 sur un élément support 15 prenant par exemple la forme d'un renfort longeron situé dans une zone sous-plancher d'un véhicule automobile.

Comme cela est illustré par la figure 3a, le raccord fluidique 1 est mis en position sur la platine de montage 11 en faisant coopérer les plots d'indexage 12 avec les trous pilotes 5 ménagés dans les pattes 6. Les axes X3 des ouvertures 7 et X2 des trous pilotes 5 du raccord 1 sont alors respectivement confondus avec les axes X4 des broches de vissage 13 et X5 des plots d'indexage 12 de la platine 11. Deux vis sont mises en place sur les broches 13. Le cas échéant, un réchauffeur thermique (non représenté) associé au raccord 1 pourra également être installé sur la platine 11 contre l'appui 18.

Comme cela est illustré par la figure 3b, la platine de montage 11 supportant le raccord 1 est ensuite déplacée en X-Y à proximité de l'élément support 15, de sorte que les broches de vissage 13 sont positionnées en regard des trous de fixation correspondants réalisés dans l'élément support 15. Le raccord fluidique 1 est ensuite vissé par activation des broches de vissage 13, de telle façon que les pattes 6 sont maintenues serrées entre la tête d'une vis et l'élément support 15, et le cas échéant par l'intermédiaire d'une rondelle de serrage.

La platine de montage mécanique 11 est ensuite retirée après l'opération en l'éloignant du raccord fluidique 1.

## Revendications

1. Raccord fluidique à plusieurs voies (1) pour véhicule automobile comportant un corps (4) ayant au moins deux embouts (31, 32, 33, 34) de connexion à des conduits de fluide, et au moins une ouverture (7) apte à autoriser un passage d'un moyen de fixation pour fixer ledit raccord fluidique (1) sur un élément support (15),
**caractérisé en ce que** ledit raccord fluidique (1) comporte en outre un moyen d'indexage (9) dudit raccord fluidique (1) par rapport à une platine de montage mécanique (11) par coopération entre un plot d'indexage (12) et un trou pilote (5) correspondant,
**en ce que** ledit raccord fluidique comporte au moins deux pattes (6) issues dudit corps (4), chaque patte (6) comportant un moyen d'indexage (9) et une ouverture (7) pour le passage d'un moyen de fixation,
et **en ce que** ledit moyen d'indexage (9) est constitué par un trou pilote (5) réalisé dans une surépaisseur (10) située sur ladite patte (6).

2. Raccord fluidique à plusieurs voies selon la revendication 1, **caractérisé en ce que** ledit moyen d'indexage (9) est constitué par un trou pilote (5) appartenant audit raccord fluidique (1) apte à coopérer avec un plot d'indexage (12) appartenant à ladite platine de montage mécanique (11).

3. Raccord fluidique à plusieurs voies selon la revendication 1 ou 2, **caractérisé en ce que** ledit moyen d'indexage (9) présente un axe (X2) incliné par rapport à un axe (X3) de ladite ouverture (7).

4. Raccord fluidique à plusieurs voies selon la revendication 3, **caractérisé en ce que** ladite surépaisseur (10) présente une face supérieure (8) inclinée.

5. Raccord fluidique à plusieurs voies selon l'une quelconque des revendications 1 à 4, **caractérisé en ce que** ladite ouverture (7) présente une forme oblongue ayant une direction d'allongement longitudinale (D) parallèle à un axe (X1) du corps (4).

6. Raccord fluidique à plusieurs voies selon l'une quelconque des revendications 1 à 5, **caractérisé en ce que** ledit raccord fluidique (1) comporte deux embouts de connexion (31, 32) situés aux extrémités axiales dudit corps (4), et deux autres embouts de connexion (33, 34) ayant une orientation radiale par rapport à un axe (X1) dudit corps (4).

7. Système **caractérisé en ce qu'**il comprend le raccord fluidique (1) selon l'une des revendications précédentes et une platine de montage mécanique (11) avec laquelle coopère le moyen d'indexage (9) dudit raccord fluidique (1).

8. Procédé de montage automatisé d'un raccord fluidique à plusieurs voies pour véhicule automobile tel que défini selon l'une quelconque des revendications précédentes, **caractérisé en ce que** ledit procédé comporte:
- une étape de mise en place dudit raccord fluidique (1) sur une platine de montage mécanique (11) via des moyens d'indexage (9),
- une étape de positionnement dudit raccord fluidique (1) à proximité d'un élément support (15) situé en sous-caisse dudit véhicule automobile,
- une étape de vissage dudit raccord fluidique (1) sur ledit élément support (15), et
- une étape de retrait de ladite platine de montage mécanique (11).

9. Procédé selon la revendication précédente, **caractérisé en ce que** ladite étape de vissage est réalisée sur un renfort longeron (15) incliné par rapport à un plancher de véhicule.

## Patentansprüche

1. Mehrkanal-Fluidverbindung (1) für ein Kraftfahrzeug mit einer Karosserie (4) mit mindestens zwei Düsen (31, 32, 33, 34) zum Anschluss an Fluidleitungen und mindestens einer zur Genehmigung geeigneten Öffnung (7) einen Durchgang eines Befestigungsmittels zum Befestigen der Fluidverbindung (1) an einem Stützelement (15),
**dadurch gekennzeichnet, dass** die Fluidverbindung (1) ferner eine Indexierungseinrichtung (9) der Fluidverbindung (1) relativ zu einer mechanischen Montageplatte (11) durch Zusammenwirken zwischen einem Indexierungskissen (12) und umfasst ein entsprechendes Pilotloch (5),
dass die Fluidverbindung mindestens zwei Laschen (6) umfasst, die von dem Körper (4) kommen, wobei jede Lasche (6) eine Indexierungseinrichtung (9) und eine Öffnung (7) zum Durchgang einer Befestigungseinrichtung umfasst,
und dass das Indexierungsmittel (9) aus einem Pilotloch (5) besteht, das in einer zusätzlichen Dicke (10) hergestellt ist, die sich auf der Lasche (6) befindet.

2. Mehrkanal-Fluidverbindung nach Anspruch 1, **dadurch gekennzeichnet, dass** das Indexiermittel (9) durch ein Pilotloch (5) besteht, das zu dem Fluidverbindung (1) gehört, der mit einem Indexierungskissen (12) zusammenarbeiten kann. Zugehörigkeit zu der mechanischen Montageplatte (11).

3. Mehrkanal-Fluidverbindung nach Anspruch 1 oder 2, **dadurch gekennzeichnet, dass** das Indexiermittel (9) eine Achse (X2) aufweist, die relativ zu einer Achse (X3) der Öffnung (7) geneigt ist.

4. Mehrkanal-Fluidverbindung nach Anspruch 3, **dadurch gekennzeichnet, dass** die zusätzliche Dicke (10) eine geneigte Oberseite (8) aufweist.

5. Mehrkanal-Fluidverbindung nach einem der Ansprüche 1 bis 4, **dadurch gekennzeichnet, dass** die Öffnung (7) eine längliche Form mit einer Längsdehnungsrichtung (D) parallel zu einer Achse (X1) des Körpers (4) aufweist.

6. Mehrkanal-Fluidverbindung nach einem der Ansprüche 1 bis 5, **dadurch gekennzeichnet, dass** der Fluidverbinder (1) zwei Verbindungsendstücke (31, 32) aufweist, die an den axialen Enden des Körpers (4) angeordnet sind, und zwei andere Endstücke Verbindung (33, 34) mit einer radialen Ausrichtung relativ zu eine Achse (X1) des Körpers (4).

7. System, das **dadurch gekennzeichnet ist, dass** es die Fluidverbindung (1) gemäß einem der vorhergehenden Ansprüche und eine mechanische Montageplatte (11) umfasst, mit der das Indexierungsmittel (9) der Fluidverbindung (1) zusammenarbeitet.

8. Verfahren zur automatisierten Montage einer Mehrkanal-Fluidverbindung für ein Kraftfahrzeug, wie in einem der vorhergehenden Ansprüche definiert, **gekennzeichnet dadurch, dass** das Verfahren umfasst:
- einen Schritt des Aufbringens der Fluidverbindung (1) auf eine mechanische Montageplatte (11) über Indexierungsmittel (9);
- einen Schritt des Positionierens der Fluidverbindung (1) in der Nähe eines Stützelements (15), das sich im Unterboden des Kraftfahrzeugs befindet,
- einen Schritt des Aufschraubens der Fluidverbindung (1) auf das Trägerelement (15) und
- ein Schritt zum Entfernen der mechanischen Montageplatte (11).

9. Verfahren nach dem vorhergehenden Anspruch, **dadurch gekennzeichnet, dass** der Schraubschritt an einer Längselementverstärkung (15) ausgeführt wird, die relativ zu einem Fahrzeugboden geneigt ist.

## Claims

1. Multichannel fluid connection (1) for a motor vehicle comprising a body (4) having at least two nozzles (31, 32, 33, 34) for connection to fluid conduits, and at least one opening (7) suitable for authorizing a passage of a fixing means for fixing said fluid connection (1) on a support element (15),
**characterized in that** said fluid connection (1) further comprises an indexing means (9) of said fluid connection (1) relative to a mechanical mounting plate (11) by cooperation between an indexing pad (12) and a corresponding pilot hole (5),
**in that** said fluid connection comprises at least two tabs (6) coming from said body (4), each tab (6) comprising an indexing means (9) and an opening (7) for the passage of a fixing means,
and **in that** said indexing means (9) consists of a pilot hole (5) made in an extra thickness (10) located on said tab (6).

2. Multichannel fluid connection according to claim 1, **characterized in that** said indexing means (9) consists of a pilot hole (5) belonging to said fluid connection (1) able to cooperate with an indexing pad (12) belonging to said mechanical mounting plate (11).

3. Multichannel fluid connection according to claim 1 or 2, **characterized in that** said indexing means (9) has an axis (X2) inclined relative to an axis (X3) of said opening (7).

4. Multichannel fluid connection according to claim 3, **characterized in that** said additional thickness (10) has an inclined upper face (8).

5. Multichannel fluid connection according to any one of claims 1 to 4, **characterized in that** the said opening (7) has an oblong shape having a longitudinal elongation direction (D) parallel to an axis (X1) of the body (4).

6. Multichannel fluid connection according to any one of claims 1 to 5, **characterized in that** said fluidic connector (1) has two connection end pieces (31, 32) located at the axial ends of said body (4), and two other end pieces connection (33, 34) having a radial orientation relative to an axis (X1) of said body (4).

7. System **characterized in that** it comprises the fluid connection (1) according to one of the preceding claims and a mechanical mounting plate (11) with which the indexing means (9) of said fluidic connection (1) cooperates.

8. Process for the automated mounting of a multichannel fluid connection for a motor vehicle as defined in any one of the preceding claims, **characterized in that** the said process comprises:
- a step of placing said fluidic connection (1) on a mechanical mounting plate (11) via indexing means (9),
- a step of positioning said fluidic connector (1) near a support element (15) located in the underbody of said motor vehicle,
- a step of screwing said fluid connection (1) onto said support element (15), and
- a step of removing said mechanical mounting plate (11).

9. Method according to the preceding claim, **characterized in that** the said screwing step is carried out on a longitudinal member reinforcement (15) inclined relative to a vehicle floor.
